# FASCICULE DE BREVET EUROPEEN

(11) **EP 0 741 828 B1**
(45) Date de publication et mention de la délivrance du brevet: **19.02.2003**
(21) Numéro de dépôt: 95941749.4
(22) Date de dépôt: 01.12.1995
(51) Int. Cl.: E04C 3/07, H02G 3/30, E04H 17/12, E04B 9/06

(54) **ELEMENT PORTEUR POUR STRUCTURES EN TREILLIS**
TRAGELEMENT FÜR GITTERSTRUKTUREN
SUPPORTING MEMBER FOR LATTICE STRUCTURES

(30) Priorité: 01.12.1994 FR 9414435
(43) Date de publication de la demande: 13.11.1996
(73) Titulaire: METAL DEPLOYE S.A., F-21500 Montbard (FR)
(72) Inventeur: DURIN, Michel, F-78210 Saint-Cyr-l'Ecole (FR)
(74) Mandataire: Barbin le Bourhis, Joel
(86) Numéro de dépôt international: FR9501584
(87) Numéro de publication internationale: WO96017143

(56) Documents cités:
- EP-A- 0 258 157
- EP-A- 0 596 207
- CH-A- 441 683
- DE-A- 2 641 667
- DE-A- 2 819 631
- DE-C- 134 830
- FR-A- 379 668
- FR-A- 2 418 313
- FR-A- 2 697 690
- GB-A- 125 748
- US-A- 5 315 803

## Description

La présente invention se rapporte aux éléments porteurs pour chemins de câbles en treillis du genre comportant des moyens de fixation adaptés à recevoir des composants longilignes se répétant à des intervalles prédéterminés dans le chemin de câbles à supporter. Il peut s'agir de toutes sortes de chemins de câbles en treillis soudés ou analogues à mailles d'éléments longilignes du type fil ou tige, en particulier de chemins de câbles dans les équipements industriels.

Selon les applications, les surfaces porteuses de ces chemins de câbles peuvent présenter diverses orientations et nécessiter des moyens de fixation convenablement adaptés de construction et/ou de mise en oeuvre plus ou moins complexe ; il peut s'agir ainsi de fixation sur consoles, sur des suspentes, sur pendards, etc...

Le document FR-A-2 697 690 décrit un élément porteur pour chemin de câbles en treillis à mailles de composants longilignes, fils ou tiges, comportant au moins un profil canal avec une paroi dorsale entre deux ailes ; ici, l'élément porteur est en forme de console et le chemin de câbles est adapté à reposer sur son plan supérieur ; des languettes en saillie sur ledit plan supérieur sont prévues pour la retenue d'éléments longilignes du chemin de câbles ; cette disposition présente un inconvénient : lors de la mise en place des câbles par tirage, les composants longilignes du fond du chemin de câbles guident en quelque sorte ces câbles vers les bords agressifs des languettes en saillie.

Le document FR-A-379 668 décrit, dans un domaine technique différent de celui de l'invention, une clôture en fils métalliques dans laquelle, selon la variante des figures 2, 6 et 7 de ce document, un poteau présente un profil canal muni d'encoches découpées dans sa face dorsale ; ces encoches sont découpées dans les ailes du montant et débouchent sur le bord libre des ailes ; en transposant cette disposition à la fixation d'un chemin de câbles, on voit que les bords libres des ailes constituent là aussi un obstacle agressif pour les câbles mis en place par tirage, tandis qu'ils occupent également l'emplacement prévu pour les câbles.

Par ailleurs, la pièce d'arrêt de l'élément porteur selon le document cité ci-dessus, telle qu'elle y est décrite et représentée, n'assure un maintien efficace que pour un fil d'un diamètre donné. L'élément porteur de la présente invention permet de recevoir et de fixer des éléments longilignes de différents diamètres,

Selon l'invention, un élément porteur pour chemin de câbles en treillis à mailles de composants longilignes fils ou tiges, comportant au moins un profil canal avec une paroi dorsale entre deux ailes, est caractérisé en ce que ledit profil canal présente des encoches dites de supportage répétées selon la longueur du profil canal avec un pas correspondant à un intervalle de répétition desdits composants longilignes, lesdites encoches de supportage étant découpées à cheval sur les arêtes de la paroi dorsale, c'est-à-dire tant dans la paroi dorsale que partiellement dans les deux ailes, de manière à ménager dans la paroi dorsale, à l'aplomb de chaque encoche de supportage, une languette unique limitée en longueur et en largeur pour permettre l'engagement de composants longilignes du chemin de câbles et être rabattables autour d'un composant longiligne engagé dans l'encoche de supportage.

Les encoches ainsi découpées et surmontées sur une partie de leur longueur par la languette découpée dans la face dorsale du profilé constituent un logement pouvant être adapté par ses dimensions et son pas de répétition à la réception par simple emboîtement des composants longilignes, fils ou tiges, du chemin de câbles en treillis à supporter.

En cas d'orientation verticale du chemin de câbles, celui-ci peut simplement reposer par gravité dans les encoches de l'élément porteur. Quoi qu'il en soit, la fixation dans les encoches peut être assurée par simple repliement des languettes sur le composant mis en place.

Selon une disposition avantageuse de l'invention, les profils en canal sont groupés par paires de deux profils canal en bordure des ailes d'un profilé dit de base de forme générale en oméga.

On est conduit ainsi à un élément de structure offrant de remarquables performances de résistance mécanique en vue de la constitution d'un élément utilisable notamment en poutre, console ou autres.

Le profilé de base peut avantageusement être coudé une ou deux fois pour la formation d'une console ou d'un élément de suspension, des perforations de fixation pouvant être ménagées pour le montage sur une paroi verticale ou horizontale, l'aménagement d'encoches de portage étant limité alors à une fraction du profilé.

L'invention a également pour objet l' utilisation d'un tel élément porteur pour chemin de câbles en treillis, tel que ci-dessus, dans laquelle au moins une languette à l'aplomb d'une encoche de supportage est rabattue autour d'un composant longiligne engagé dans ladite encoche de supportage.

Selon un autre développement, l'invention prévoit encore l'utilisation d'un élément porteur pour chemins de câbles en treillis tel que ci-dessus dans laquelle, pour le maintien desdits chemins de câbles en position horizontale, ledit élément porteur est solidarisé à une structure de poutre disposée verticalement, ladite structure de poutre présentant une forme de section en X et comportant la disposition dos à dos de deux profilés de base en oméga avec chacun un fond plat et deux ailes évasées bordés selon un profil canal. Cette structure de poutre est un élément de structure robuste utilisable en poutre ou en poteau avec possibilité d'accès sur quatre faces.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un tronçon de profil selon l'invention ;
la figure 2 est une vue en coupe selon le plan II-II de la figure 1 ;
la figure 3 est une vue en perspective d'une configuration en console de support pour chemin de câble;
la figure 4 est une vue en coupe selon le plan IV-IV de la figure 3;
la figure 5 est une vue en perspective d'une configuration en console double ;
la figure 6 est une vue en perspective d'un assemblage de deux profils dos à dos ;
la figure 7 est une vue en coupe selon le plan VII-VII de la figure 6 ;
la figure 8 est une vue en perspective d'une structure dite de poutre utilisable pour la fixation d'un élément porteur selon l'invention ;
la figure 9 est une vue en bout de cette structure ;
la figure 10 est une vue schématique d'une étape de la fabrication par profilage d'un tronçon de profil selon la figure 1 ;
la figure 11 est une vue en perspective d'un tronçon de profil canal simple ;
la figure 12 montre un tronçon semblable muni d'une patte de fixation ;
la figure 13 montre en perspective un exemple d'agencement formant pendard ;
la figure 14 montre le détail d'une pièce de fixation incorporée dans l'agencement de la figure 13 ;
la figure 15 montre un exemple d'application d'une double console semblable à celle de la figure 5 avec montage sur un poteau constitué par une structure de poutre selon la figure 8.

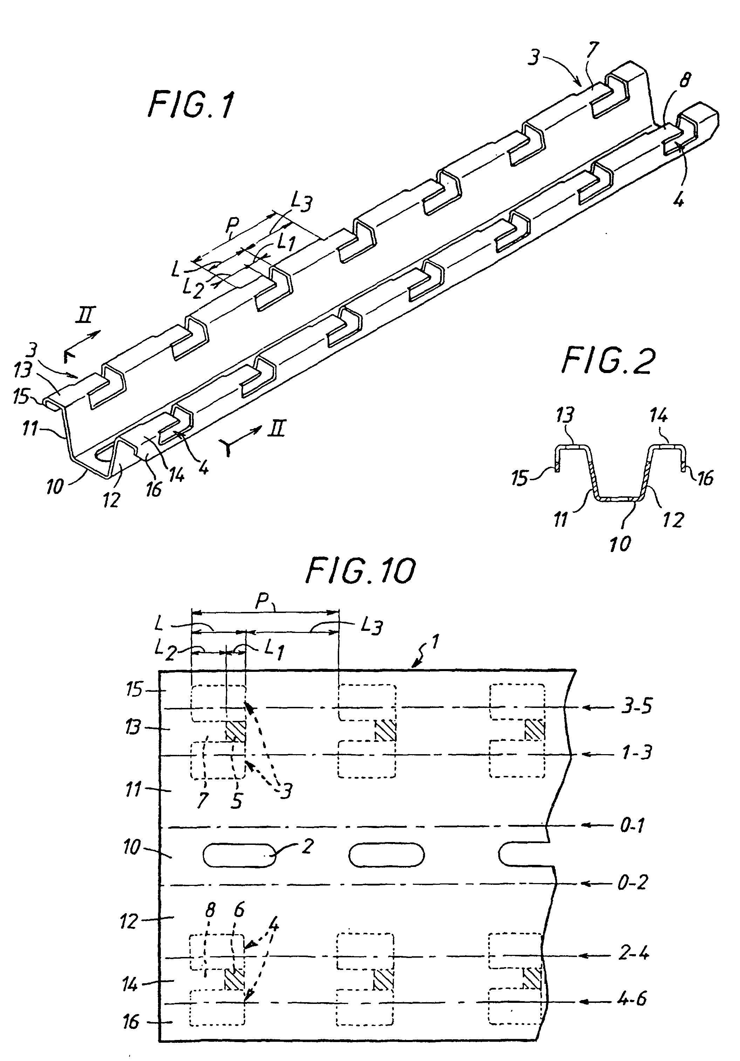

Suivant la forme de réalisation choisie et représentée aux figures 1 et 2, un élément support selon l'invention est constitué par un profil de forme générale en oméga inversé avec un fond plat 10 entre deux faces latérales évasées 11, 12, constituant chacune avec un plat 13, 14 et un bord tombé 15, 16 un profil canal surélevé au-dessus du fond 10 et ouvert en direction de celui-ci.

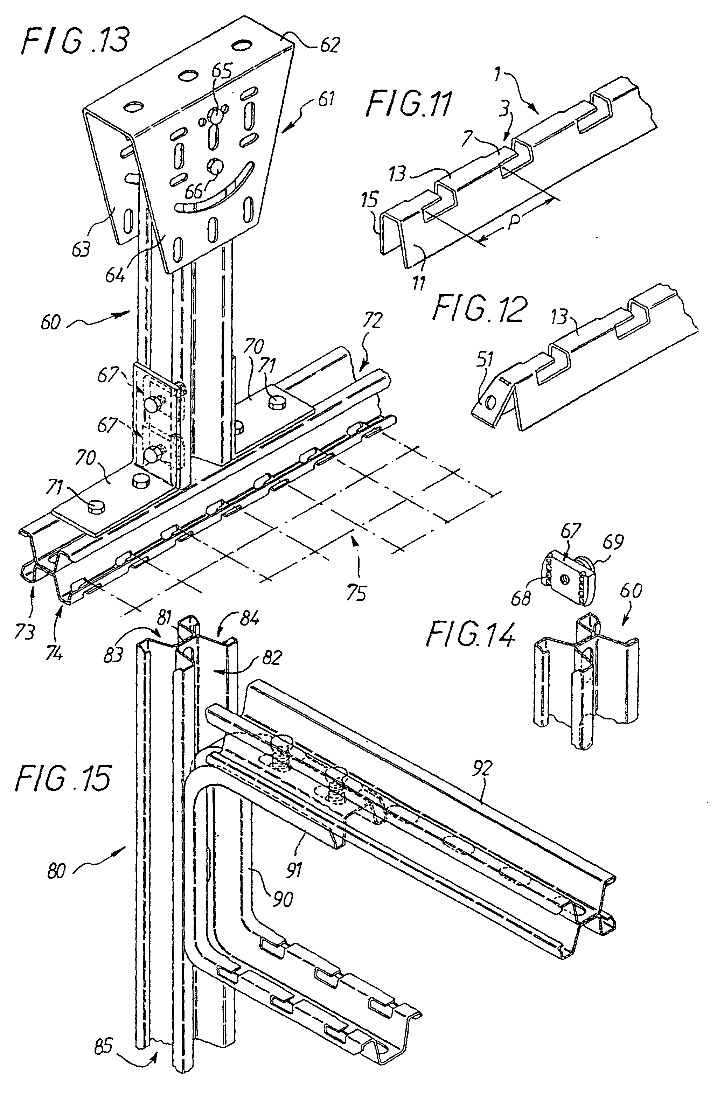

La figure 10 montre comment un tel profil est réalisé par profilage à partir d'une bande de tôle 1 de largeur correspondante, les lignes en traits mixtes repérées de 0-1 à 4-6 indiquant les lignes de pliage entre zones adjacentes successives. Préalablement au formage on aura découpé dans le fond plat 10 une série de perforations alignées 2. Par ailleurs, on aura découpé à cheval sur les lignes de pliage 1-3, 3-5, d'une part, et 2-4, 4-6, d'autre part, des zones rectangulaires repérées 3 et 4, d'une certaine longueur L, adaptées à se détacher lors du pliage et à donner lieu ainsi dans chacun des profils canal aux encoches correspondantes visibles sur la figure 1, se succédant avec un certain pas P.

Après pliage, on découpe enfin dans les plats 13 et 14 des tronçons rectangulaires 5,6 de longueur L1 de manière à ménager dans le plat correspondant des languettes 7, 8 s'étendant sur la fraction résiduelle L2 de la longueur L de chaque encoche.

On voit donc que l'élément porteur ainsi constitué présente dans la face dorsale de chacun des deux profils en canal inversé surmontant le fond plat 10, une suite d'encoches 3, 4 de longueur L, se répétant à un pas P et comportant chacune une languette de recouvrement 7, 8 découpée dans la paroi de fond 13, 14 du canal.

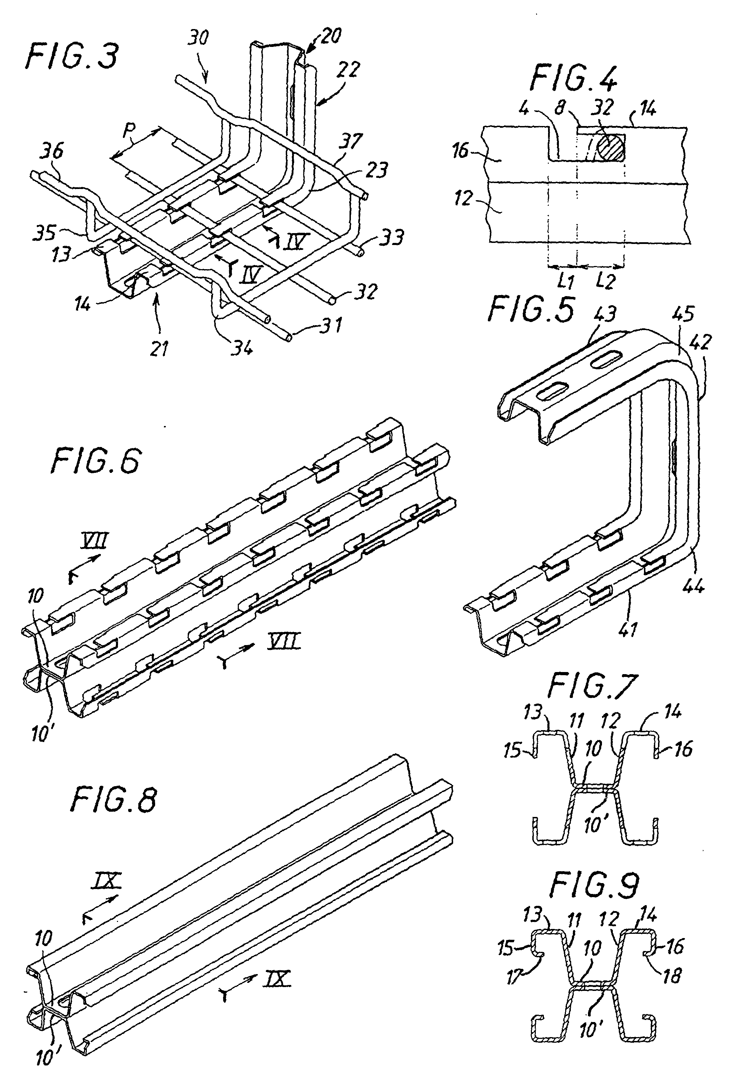

Dans l'exemple d'application illustré aux figures 3 et 4, un tel élément porteur est constitué sur l'une seulement des branches d'un profil 20 formé avec deux branches 21, 22 ménagées à angle droit de part et d'autre d'une zone de coudé 23, seule la branche 21 étant encochée de la manière décrite avec, dans cet exemple, dans chacune des parois de fond de canal 13, 14, une série limitée à trois encoches pour recevoir respectivement les trois fils de chaîne 31, 32, 33 d'un tronçon de chemin de câble 30 en treillis où lesdits fils de chaîne sont de manière usuelle soudés sur des fils de trame 34, 35 portant par ailleurs des fils de chaîne de bordure surélevés 36, 37.

Comme il est visible sur la figure 4, chaque fil de chaîne associé tel que 32 est logé dans une encoche correspondante, telle que 4, et la languette 8 peut être rabattue si on le désire sur le fil ainsi logé pour en assurer la fixation. Ce système d'accrochage par languette permet d'immobiliser tous éléments longilignes à section ronde, carrée ou autre n'excédant pas la hauteur de l'encoche. Le verrouillage s'effectue par la déformation vers l'intérieur de la languette qui épousera ainsi selon une génératrice l'élément longiligne en bloquant celui-ci dans le fond de l'encoche.

Dans cet exemple d'application de la figure 3, la console 20 est adaptée à être fixée par boulonnage par exemple de sa branche 22 non encochée sur une paroi de support verticale.

La figure 5 montre un exemple de structure en double console à trois branches 41, 42, 43 raccordées entre elles par des zones de coude à angle droit 44, 45. Ici encore, seule la branche 41 étant encochée, la fixation est également possible par la branche 43 sur une quelconque surface de support horizontale, plafond ou autre.

Les perforations 2 ménagées dans le fond plat du profil 10 en oméga permettront la fixation sur tout support : murs, plafonds, poutres, sols, mais conviennent aussi à la possibilité d'assemblage éventuel de deux profils 10, 10' selon le schéma des figures 6 et 7 par boulonnage, si on le désire, tout en ménageant la possibilité d'assemblage éventuel par soudure électrique par points ou à la molette. L'ensemble ainsi constitué forme alors une poutre en X qui offre des caractéristiques particulièrement avantageuses du point de vue résistance mécanique, mais aussi du point de vue de possibilités fonctionnelles.

Le profil en X tel qu'illustré notamment à la figure 7 offre ainsi des possibilités de fixation sur les quatre côtés et peut être avantageusement utilisé en tant que poutre dans un ensemble structural ; on peut notamment envisager l'utilisation comme support dans une installation de chemins de câble dans les applications du type dit "pendard".

Dans un développement du profil tel qu'illustré aux figures 8 et 9, on trouve à la suite des ailes 11, 13, 15 et 12; 14, 16, des ailes de bordure 17, 18 retournées vers l'intérieur constituant une structure du genre "caisson" quadri-dimensionnel avec sur des paires de faces opposées une forme de rail d'ancrage. Le développement ouvre des possibilités de réalisation de structures porteuses ou de systèmes de pendards pour la fixation de consoles à talon.

L'invention ouvre ainsi de vastes possibilités de développements et d'applications ce que l'on se propose de commenter ci-après en référence aux figures 11 à 15.

Il convient de reconsidérer d'abord l'élément porteur selon l'invention tel qu'illustré dans sa forme la plus élémentaire aux figures 11 et 12.

Alors que dans les formes de réalisation précédemment considérées de tels éléments porteurs étaient groupés par paires en bordure des ailes d'un profilé de base en oméga, on a illustré ici un élément porteur dans la forme d'un profil canal unique avec ici deux ailes 11, 15 se présentant symétriquement de part et d'autre du fond plat 13. Les deux ailes du profilé peuvent être d'égales longueurs ou de longueurs différentes comme dans les précédentes formes de réalisation. Ces deux ailes ne sont pas nécessairement symétriques ni en longueur ni en forme ni en angle. Le profil canal pourrait aussi être partie d'un profilé de forme générale tubulaire. Mais dans tous les cas les languettes 7 découpées dans la face dorsale du profil, tout en pouvant se rabattre vers l'intérieur, ne vont jamais se trouver en saillie et ne formeront donc aucune aspérité susceptible d'une quelconque action agressive à l'égard d'objets, câbles ou autres qui pourront avoir à se déplacer par glissement au contact de la face dorsale de l'élément porteur.

Un tel élément porteur peut être supporté et fixé par tous moyens en soi connus dans une quelconque position spatiale, horizontale, verticale ou autre, avec un chemin de câbles en treillis, soit posé, soit suspendu, selon les cas. Ainsi, à titre d'exemple seulement l'élément porteur de la figure 12 est muni en bout d'une patte de fixation 51 formée en prolongement de la face dorsale 13, éventuellement repliée selon un angle donné, et percée d'au moins un trou de fixation sur un quelconque support associé en vue d'un positionnement Vertical, horizontal, inversé ou autre.

La figure 13 illustre une application du type pendard où l'on retrouve un tronçon 60 de profilé en double oméga du genre illustré à la figure 8 descendant verticalement à partir d'un organe de suspension 61 en forme d'étrier comportant une paroi de fond 62 percé de trous de fixation par boulons ou tire-fonds par exemple à une structure de plafond ou à une poutre ou analogue (non représentée), et deux flasques 63, 64 recevant des axes de suspension 65, 66 coopérant avec des perforations (non détaillées) des fonds plats des profilés en oméga composant le double profilé 60. Comme il est visible sur la vue en coupe de la figure 9, on trouve de part et d'autre de ces fonds plats et en bout des ailes 11 et 12 une structure en caisson telle que 13, 15, 17 quadridimensionnel adapté à former deux couples de rails d'ancrage opposés. Dans ce cas le tronçon 60 de profilé ne comporte ni encoche ni languette.

Dans l'application illustrée aux figures 13 et 14, ces rails d'ancrage sont utilisés par paires pour le calage d'une équerre 70 de chaque côté par l'intermédiaire de pattes de fixation 67 équipées de gorges 68 éventuellement munies de crans (ici représentés) qui viennent (les gorges) en appui sur les faces de retenue telles que 15 des caissons par l'intermédiaire de rails tels que 17 et des écrous 69 de fixation. Les deux équerres ainsi fixées dans l'espace sont adaptées par exemple au montage au moyen de boulons 71 d'une poutre 72 également en double oméga, mais du type illustré à la figure 7, avec formation en bordure des ailes du profilé en oméga inférieur seulement d'éléments porteurs 73, 74 avec encoches et languettes telles que décrites ci-dessus, pour une structure en treillis 75 schématiquement indiquée en traits mixtes et pouvant faire partie d'un plafond par exemple.

La figure 15 montre un exemple d'utilisation en poteau d'un tronçon 80 de structure de poutre de section en X selon les figures 8 et 9. On retrouve donc ici, de part et d'autre d'une double paroi centrale 81 résultant de la fixation dos à dos des deux profilés de base en oméga, deux logements 82, 83 opposés de section en forme de canal évasé et, de part et d'autre de ces logements, deux paires de caissons 84 et 85 adaptées à former des rails d'ancrage ou coulisses pour des pièces coulissantes de formes correspondantes dont les pattes de fixation 67 précitées constituent des exemples.

Dans l'application illustrée à la figure 15, seul le logement latéral 82 est utilisé pour la fixation par emboîtement et boulonnage (non détaillé) d'une double console 90 semblable à celle de la figure 5 avec montage sur sa branche supérieure 91 d'un tronçon 92 de structure de poutre semblable à celle du poteau 80 mais en position horizontale.

On voit donc que l'utilisation d'un tel profilé en double oméga offre des moyens de montage des pièces à supporter selon quatre directions rayonnantes. On dispose en effet en premier lieu d'une paire de canaux évasés délimités par les ailes de chaque profilé de base en regard du fond plat correspondant : c'est le cas des canaux repérés 82 et 83 de la figure 15 par exemple. On dispose en second lieu de la seconde paire de canaux d'orientation perpendiculaire que constituent sur cette même figure les rails d'ancrage 84, 85.

L'invention n'est bien entendu pas limitée aux détails des formes de réalisation ci-dessus décrites à titre de simple illustration. Il convient notamment d'observer que les éléments porteurs et les structures de poutre peuvent être métalliques ou non métalliques, par exemple en matières plastiques déformables, ou en tout autre matériau ayant une tenue mécanique suffisante pour subir une déformation et conserver cette déformation.

## Revendications

1. Elément porteur pour chemin de câbles en treillis à mailles de composants longilignes (31,32,33) fils ou tiges, comportant au moins un profil canal (1) avec une paroi dorsale (13) entre deux ailes (11,15), **caractérisé en ce ce que** ledit profil canal (1) présente des encoches dites de supportage (3) répétées selon la longueur du profil canal (1) avec un pas (P) correspondant à un intervalle de répétition desdits composants longilignes, lesdites encoches de supportage (3) étant découpées à cheval sur les arêtes de la paroi dorsale (13), c'est-à-dire tant dans la paroi dorsale (13) que partiellement dans les deux ailes (11,15), de manière à ménager dans la paroi dorsale (13), à l'aplomb de chaque encoche de supportage (3), une languette (7) unique limitée en longueur et en largeur pour permettre l'engagement de composants longilignes du chemin de câbles et être rabattables autour d'un composant longiligne engagé dans l'encoche de supportage (3).

2. Elément porteur selon la revendication 1, **caractérisé en ce que** la largeur (L1) des passages ménagés par les languettes (7) correspond sensiblement à la hauteur des encoches de supportage (3).

3. Elément porteur selon la revendication 2, **caractérisé en ce que** la hauteur des encoches de supportage (3) n'excède pas, ou très peu, la section des éléments longilignes qu'elles sont destinées à recevoir.

4. Elément porteur selon l'une des revendications 1 à 3, **caractérisé en ce qu'**il est muni en bout d'une patte de fixation (51) formée en prolongement de la paroi dorsale (13).

5. Elément porteur selon l'une des revendications 1 à 4, **caractérisé en ce qu'**il comporte deux profils canal en bordure chacun d'une face latérale (11, 12) d'un profilé de base de forme générale en oméga avec un fond plat (10) entre les deux faces latérales (11, 12) constituant chacune, avec un plat (13, 14) et un bord tombé (15,16), un profil canal (1).

6. Elément porteur selon la revendication 5, **caractérisé en ce qu'**il est formé de deux branches (21, 22) ménagées à angle droit de part et d'autre d'une zone de coude (23).

7. Elément porteur selon la revendication 5, **caractérisé en ce qu'**il est formé de trois branches (41, 42, 43) raccordées entre elles par des zones de coude (44, 45) à angle droit.

8. Elément porteur selon l'une des revendications 5 à 7, **caractérisé en ce que** les encoches de supportage (3, 4) ne sont formées que sur une fraction de la longueur du profilé de base.

9. Elément porteur selon l'une des revendications 5 à 8, **caractérisé en ce que** des perforations de montage (2) sont pratiquées dans le fond plat (10) du profilé de base.

10. Elément porteur selon l'une des revendications 5 à 9, **caractérisé en ce qu'**il comporte l'assemblage dos à dos de deux profilés de base en oméga en une structure de poutre présentant une forme de section en X.

11. Elément porteur selon la revendication 10, **caractérisé en ce que** les deux profilés de base en oméga sont assemblés par soudage ou boulonnage de leurs fonds adossés.

12. Utilisation d'un élément porteur pour chemin de câbles en treillis, selon l'une des revendications 1 à 11, dans laquelle au moins une languette (7) à l'aplomb d'une encoche de supportage (3) est rabattue autour d'un composant longiligne engagé dans ladite encoche de supportage (3).

13. Utilisation d'un élément porteur pour chemin de câbles en treillis, selon l'une des revendications 1 à 11, dans laquelle, pour le maintien en position horizontale dudit chemin de câbles, ledit élément porteur est solidarisé à une structure de poutre disposée verticalement, ladite structure de poutre présentant une forme de section en X et comportant la disposition dos à dos de deux profilés de base de forme générale en oméga avec chacun un fond plat (10,10') entre deux faces latérales (11,12) constituant chacune, avec un plat (13,14) et un bord tombé (11,16), un profil canal.

14. Utilisation selon la revendication 13, **caractérisée en ce que** le fond plat de chacun des profilés de base en oméga de la structure de poutre est équipé de moyens de montage, en particulier des perforations adaptées à permettre le montage de pièces de part et d'autre.

15. Utilisation selon l'une des revendications 13 ou 14, **caractérisée en ce que** les deux profilés de base en oméga de la structure de poutre sont assemblés par soudage, rivetage, vissage ou boulonnage de leurs fonds adossés.

16. Utilisation selon l'une des revendications 13 à 15, **caractérisée en ce que** la structure de poutre présente des moyens de montage de pièces à supporter selon quatre directions rayonnantes, ces moyens comportant une paire de canaux évasés délimités par les ailes de chaque profilé de base en regard du fond plat correspondant et une seconde paire de canaux d'orientation perpendiculaire délimités par deux ailes adjacentes bordées d'un profil rentrant.

17. Utilisation selon la revendication 16, **caractérisée en ce que** ledit profil rentrant de bordure des ailes de la seconde paire de canaux est un profil canal (11, 13, 15).

18. Utilisation selon la revendication 16, **caractérisée en ce que** le profil rentrant de bordure des ailes de la seconde paire de canaux est un profil en caisson (11, 13, 15, 17).

19. Utilisation selon l'une quelconque des revendications 16 à 18, **caractérisée en ce que** pour les pièces destinées à coopérer avec les canaux de la première paire, la fixation s'opère par boulonnage dans des perforations des fonds plats adossés, tandis que pour les pièces destinées à se monter en regard des canaux de la seconde paire, la fixation s'opère par l'intermédiaire de moyens adaptés à coulisser dans ces canaux et à s'y immobiliser par serrage contre bordures.

20. Utilisation selon la revendication 19, **caractérisée en ce que** lesdits moyens adaptés à coulisser sont des pattes de fixation (67) équipées de gorges (68), éventuellement munies de crans en appui sur les faces de retenue (15) par l'intermédiaire de rails (17), et d'écrous (69) de fixation.

## Patentansprüche

1. Tragelement für gitterförmige Kabelwannen mit Maschen aus langgestreckten Bauteilen (31, 32, 33) aus Drähten oder Stangen, das mindestens ein Kanalprofil (1) mit einer Rückwand (13) zwischen zwei Flügeln (11, 15) aufweist, **dadurch gekennzeichnet, daß** das Kanalprofil (1) sogenannte Stützkerben (3) aufweist, die sich über die Länge des Kanalprofils (1) mit einem Abstand (P) wiederholen, der einem Wiederholungsintervall der langgestreckten Bauteile entspricht, wobei die Stützkerben (3) über die Kanten der Rückwand (13) hinaus, d.h. sowohl in der Rückwand (13) als auch teilweise in den beiden Flügeln (11, 15), ausgeschnitten sind, um in der Rückwand (13) senkrecht vor jeder Stützkerbe (3) eine einzige Zunge (7) zu bilden, die in Länge und Breite begrenzt ist, um das Einführen von langgestreckten Bauteilen der Kabelwanne zu ermöglichen und um um ein in die Stützkerbe (3) eingeführtes, langgestrecktes Bauteil umklappbar zu sein.

2. Tragelement nach Anspruch 1, **dadurch gekennzeichnet, daß** die Breite (L1) der von den Zungen (7) gebildeten Durchlässe im wesentlichen der Höhe der Stützkerben (3) entspricht.

3. Tragelement nach Anspruch 2, **dadurch gekennzeichnet, daß** die Höhe der Stützkerben (3) nicht oder nur sehr wenig den Querschnitt der langgestreckten Elemente überschreitet, die sie aufnehmen sollen.

4. Tragelement nach einem der Ansprüche 1 bis 3, **dadurch gekennzeichnet, daß** es am Ende mit einer Befestigungslasche (51) versehen ist, die in Verlängerung der Rückwand (13) ausgebildet ist.

5. Tragelement nach einem der Ansprüche 1 bis 4, **dadurch gekennzeichnet, daß** es zwei Kanalprofile je am Rand einer Seitenfläche (11, 12) eines Basisprofilteils mit der allgemeinen Form eines Omega aufweist, mit einem flachen Boden (10) zwischen den beiden Seitenflächen (11, 12), die je mit einer Flachseite (13, 14) und einem Bördel (15, 16) ein Kanalprofil (1) bilden.

6. Tragelement nach Anspruch 5, **dadurch gekennzeichnet, daß** es von zwei Zweigen (21, 22) gebildet wird, die im rechten Winkel zu beiden Seiten einer Kniezone (23) ausgebildet sind.

7. Tragelement nach Anspruch 5, **dadurch gekennzeichnet, daß** es von drei Zweigen (41, 42, 43) gebildet wird, die durch rechtwinklige Kniezonen (44, 45) miteinander verbunden sind.

8. Tragelement nach einem der Ansprüche 5 bis 7, **dadurch gekennzeichnet, daß** die Stützkerben (3, 4) nur über einen Teil der Länge des Basisprofils ausgebildet sind.

9. Tragelement nach einem der Ansprüche 5 bis 8, **dadurch gekennzeichnet, daß** Montagelöcher (2) in den flachen Boden (10) des Basisprofils eingearbeitet sind.

10. Tragelement nach einem der Ansprüche 5 bis 9, **dadurch gekennzeichnet, daß** es den Zusammenbau von zwei omegaförmigen Basisprofilteilen Rücken an Rücken zu einer Balkenstruktur aufweist, die einen X-förmigen Querschnitt besitzt.

11. Tragelement nach Anspruch 10, **dadurch gekennzeichnet, daß** die beiden omegaförmigen Basisprofilteile durch Verschweißen oder Bolzenverbindung ihrer Rücken an Rücken liegenden Böden zusammengebaut werden.

12. Verwendung eines Tragelements für gitterförmige Kabelwannen nach einem der Ansprüche 1 bis 11, bei der mindestens eine Zunge (7) senkrecht vor einer Stützkerbe (3) um ein langgestrecktes Bauteil umgeklappt wird, das in die Stützkerbe (3) eingeführt ist.

13. Verwendung eines Tragelements für gitterförmige Kabelwannen nach einem der Ansprüche 1 bis 11, bei der zum Halt der Kabelwanne in der waagrechten Stellung das Tragelement fest mit einer senkrecht angeordneten Balkenstruktur verbunden ist, wobei die Balkenstruktur eine X-förmige Querschnittsform hat und die Anordnung von zwei allgemein omegaförmigen Basisprofilteilen Rücken an Rücken aufweist, die je einen flachen Boden (10, 10') zwischen zwei Seitenflächen (11, 12) aufweisen, die je mit einer Flachseite (13, 14) und einem Bördel (15, 16) ein Kanalprofil bilden.

14. Verwendung nach Anspruch 13, **dadurch gekennzeichnet, daß** der flache Boden jedes omegaförmigen Basisprofilteils der Balkenstruktur mit Montagemitteln versehen ist, insbesondere Löchern, die den Zusammenbau der Teile von beiden Seiten ermöglichen.

15. Verwendung nach einem der Ansprüche 13 oder 14, **dadurch gekennzeichnet, daß** die beiden omegaförmigen Basisprofilteile der Balkenstruktur durch Schweißen, Nieten, Schraubverbindung oder Bolzenverbindung ihrer Rücken an Rücken liegenden Böden zusammengebaut werden.

16. Verwendung nach einem der Ansprüche 13 bis 15, **dadurch gekennzeichnet, daß** die Balkenstruktur Montagemittel für in vier Strahlrichtungen zu stützende Teile aufweisen, wobei diese Mittel ein Paar von sich ausweitenden Kanälen, die von den Flügeln jedes Basisprofilteils vor dem entsprechenden flachen Boden begrenzt werden, und ein zweites Paar von senkrecht ausgerichteten Kanälen aufweisen, die von zwei benachbarten Flügeln begrenzt werden, die von einem einspringenden Profil umbördelt sind.

17. Verwendung nach Anspruch 16, **dadurch gekennzeichnet, daß** das einspringende Randprofil der Flügel des zweiten Paars von Kanälen ein Kanalprofil (11, 13, 15) ist.

18. Verwendung nach Anspruch 16, **dadurch gekennzeichnet, daß** das einspringende Randprofil der Flügel des zweiten Paars von Kanälen ein kastenförmiges Profil (11, 13, 15, 17) ist.

19. Verwendung nach einem der Ansprüche 16 bis 18, **dadurch gekennzeichnet, daß** für die Teile, die mit den Kanälen des ersten Paars zusammenwirken sollen, die Befestigung durch Bolzenverbindung in Löchern der Rücken an Rücken liegenden flachen Böden erfolgt, während für die Teile, die vor den Kanälen des zweiten Paars montiert werden sollen, die Befestigung mit Hilfe von Mitteln erfolgt, die in diesen Kanälen gleiten und darin durch Festklemmen gegen die Ränder blockiert werden können.

20. Verwendung nach Anspruch 19, **dadurch gekennzeichnet, daß** die gleitfähigen Mittel Befestigungslaschen (67) sind, die mit Kehlen (68) versehen sind, welche ggf. Rastkerben aufweisen, die auf den Halteflächen (15) mit Hilfe von Schienen (17) und Befestigungsmuttern (69) aufliegen.

## Claims

1. A bearer element for a cable track in lattice form with meshes formed by elongate components (31, 32, 33), wires or rods, comprising at least one channel profile (1) with a dorsal wall (13) between two flanges (11, 15), **characterised in that** said channel profile (1) has notches referred to as supporting notches (3) which are repeated along the length of the channel profile (1) at a pitch (P) corresponding to a repetition interval of said elongate components, said supporting notches (3) being cut out astride the edges of the dorsal wall (13), that is to say both in the dorsal wall (13) and partially in the two flanges (11, 15), in such a way as to provide in the dorsal wall (13) in vertical alignment with each supporting notch (3) a single tongue (7) which is limited in length and width to permit the engagement of elongate components of the cable track and to be bendable round an elongate component engaged in the supporting notch (3).

2. A bearer element according to claim 1 **characterised in that** the width (L1) of the passages provided by the tongues (7) substantially corresponds to the height of the supporting notches (3).

3. A bearer element according to claim 2 **characterised in that** the height of the supporting notches (3) does not exceed or very slightly exceeds the section of the elongate elements that they are intended to receive.

4. A bearer element according to one of claims 1 to 3 **characterised in that** it is provided at the end with a fixing lug (51) formed as a prolongation of the dorsal wall (13).

5. A bearer element according to one of claims 1 to 4 **characterised in that** it comprises two channel profiles each bordered by a lateral face (11, 12) of a base profile member in the general shape of an omega with a flat bottom (10) between the two lateral faces (11, 12) each constituting with a flat (13, 14) and a dropped edge (15, 16) a channel profile (1).

6. A bearer element according to claim 5 **characterised in that** it is formed by two arms (21, 22) provided at a right angle on respective sides of a bend zone (23).

7. A bearer element according to claim 5 **characterised in that** it is formed by three arms (41, 42, 43) which are connected together by bend zones (44, 45) at a right angle.

8. A bearer element according to one of claims 5 to 7 **characterised in that** the supporting notches (3, 4) are formed only over a fraction of the length of the base profile member.

9. A bearer element according to one of claims 5 to 8 **characterised in that** mounting perforations (2) are provided in the flat bottom (10) of the base profile member.

10. A bearer element according to one of claims 5 to 9 **characterised in that** it comprises the back-to-back assembly of two omega-shaped base profile members as a beam structure of an X-shaped section.

11. A bearer element according to claim 10 **characterised in that** the two omega-shaped base profile members are assembled by welding or bolting of their bottoms which are in back-to-back relationship.

12. Use of a bearer element for a cable track in lattice form according to one of claims 1 to 11 in which at least one tongue (7) in vertical alignment with a supporting notch (3) is bent around an elongate component engaged in said supporting notch (3).

13. Use of a bearer element for a cable track in lattice form according to one of claims 1 to 11 in which, to hold said cable track in a horizontal position, said bearer element is fixed to a vertically disposed beam structure, said beam structure being of an X-shaped section and comprising the back-to-back arrangement of two base profile members in the general shape of an omega each with a flat bottom (10, 10') between two lateral faces (11, 12) each constituting with a flat (13, 14) and a dropped edge (11, 16) a channel profile.

14. Use according to claim 13 **characterised in that** the flat bottom of each of the omega-shaped base profile members of the beam structure is provided with mounting means, in particular perforations for permitting mounting of components on respective sides.

15. Use according to one of claims 13 and 14 **characterised in that** the two omega-shaped base profile members of the beam structure are assembled by welding, riveting, screwing or bolting of their bottoms in back-to-back relationship.

16. Use according to one of claims 13 to 15 **characterised in that** the beam structure has means for mounting components to be supported in four radiating directions, said means comprising a pair of flared channels delimited by the flanges of each base profile member in facing relationship with the corresponding flat bottom and a second pair of channels of perpendicular orientation which are delimited by two adjacent flanges bordered by a re-entrant profile.

17. Use according to claim 16 **characterised in that** said re-entrant profile bordering the flanges of the second pair of channels is a channel profile (11, 13, 15).

18. Use according to claim 16 **characterised in that** said re-entrant profile bordering the flanges of the second pair of channels is a box profile (11, 13, 15, 17).

19. Use according to any one of claims 16 to 18 **characterised in that** for the components intended to co-operate with the channels of the first pair, fixing is effected by bolting in perforations in the flat bottoms in back-to-back relationship while, for the components intended to be fitted in facing relationship with the channels of the second pair, fixing is effected by way of means adapted to slide in said channels and to be immobilised therein by clamping against edges.

20. Use according to claim 19 **characterised in that** said means adapted to slide are fixing lugs (67) provided with grooves (68), possibly provided with catches for bearing against the retaining faces (15) by way of rails (17), and fixing nuts (69).
